Europäisches Patentamt

**European Patent Office**

Office européen des brevets

(19)

(11) Publication number: **0 037 556**
**B1**

## EUROPEAN PATENT SPECIFICATION

(12)

(45) Date of publication of patent specification: **21.03.84**

(21) Application number: **81102452.0**

(22) Date of filing: **01.04.81**

(51) Int. Cl.³: **H 04 J 7/00, H 04 L 5/04, H 04 L 27/02**

(54) Method and apparatus for frame synchronization of a supplementary information signal transmitted by level division multiplexing.

(30) Priority: **04.04.80 IT 6753080**

(43) Date of publication of application:
**14.10.81 Bulletin 81/41**

(45) Publication of the grant of the patent:
**21.03.84 Bulletin 84/12**

(84) Designated Contracting States:
**DE FR GB NL**

(56) References cited:
**DE - A - 2 330 263**
**DE - A - 3 000 941**
**FR - A - 2 446 570**
**GB - A - 2 039 447**
**US - A - 3 761 818**
**US - A - 4 131 761**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Porzio, Giusto, Pietro**
**Via Servais 200/e/23**
**Torino (IT)**

(74) Representative: **Riederer Freiherr von Paar zu Schönau, Anton**
**Freyung 615 Postfach 2664**
**D-8300 Landshut (DE)**

Method and apparatus for frame synchronization of a supplementary information
signal transmitted by level division multiplexing

The present invention relates to digital-transmission systems and, in particular, to a method of frame synchronization of a supplementary information signal added to a main multilevel signal by means of level division multiplexing (LDM), as defined in the prior art portion of claim 1, and to an apparatus as defined in the prior art portion of claim 9, said apparatus being preferred for carrying out the method of claim 1,

LDM technique, whose application to the present invention will be described in details hereinafter, can be applied in amplitude modulation systems (AM) as well as in frequency modulation systems (FM), including those AM and FM only partly. Said modulation systems tolerate addition of supplementary modulation levels outside the extreme modulation levels provided for in the main signal. It is known, in fact, that the excursions, of the signal outside the extreme levels otherwise provided for, do not involve a variation of the usual decision thresholds adopted for the main signal, since the waveforms exceeding the extreme level outside the main modulation area remain, with respect to the usual decision threshold, on the same side as the exceeded level, and therefore they are decoded as corresponding to the extreme level exceeded.

The addition of supplementary information signals by LDM technique is obtained by variations appropriately introduced into the waveforms of the main signal corresponding to extreme levels (modulable waveforms). The supplementary information is extracted at the receiving side by detecting at first the presence of modulable waveforms and then, by means of appropriate supplementary decision thresholds, their possible modifications.

In this way the main information signal undisturbedly flows and acts only as reference basis for the supplementary modulation area that remains completely outside the main modulation area.

The insertion and the extraction of the supplementary information signal take place without altering or recognizing the frame of the main stream, as it would be required in time division mutliplexing (TDM) systems. Besides no particular restriction is imposed to the band occupancy of the main information as it would be required in frequency division multiplexing (FDM) systems.

The basic problem associated with the application of the LDM technique is that of synchronizing the receiving apparatus that is to extract the supplementary information signal. In fact the symbols of the supplementary information signal are transmitted at time instants that are not predetermined but that are random, since they are to be associated with the modulable waveforms of the main stream, that are random-ordered in time.

A method and apparatus designed to solve this problem in a general case is described in US—A—4 131 761=DE—C—2 717 163 in the name of· the same 'applicant. Said method has been described organizing the supplementary information signal into a rather complex frame, comprising an alignment word; said alignment word consists of a fixed part and a part that can vary in dependence on the frame, designed to exactly define the time instant at which the first supplementary digital symbol is being transmitted in each frame. Such organization presents the disadvantage of requiring both at the transmitting and at the receiving ends rather complex circuits and of requiring an increment in the mean rate of the stream of supplementary information signal for the transmission of the frame alignment word.

The foregoing and other disadvantages are overcome by the method and apparatus of the invention as defined in claims 1 and 9, respectively, which lead to a system of frame synchronization of the supplementary information that:

— considerably simplifies transmitting and receiving circuits;
— does not require an alignment word consisting of a part varying in dependence on the frame;
— in the most interesting practical applications does not even require a fixed part for the frame alignment;
— therefore does not entail any increase in the mean transmission rate of the supplementary information signal.

An embodiment of this invention will now be described by way of example, with reference to the accompanying drawings in which:

Fig. 1 is a block diagram of transmitting apparatus of a digital transmission system embodying this invention;

Fig. 2 is a block diagram of receiving apparatus of the ditital transmission system;

Fig. 3 is a block diagram of a particular embodiment of the block denoted by PP in Fig. 2;

Fig. 4 is a set of diagrams of the waveforms relating to an example of a portion of a signal transmitted during one frame interval;

Fig. 5 is a set of diagrams of the waveforms relating to the same example of signal shown in Fig. 4, and considered here as being received during a frame interval.

A short description is now given of the principles of operation of the system and, in particular, of the simplifications adopted to facilitate understanding of the construction and operation of the embodiment here considered. In general, the main information signal consists of a series of waveforms respectively corresponding to digital symbols having a symbol cycle T of a series of the digital symbols representing the information to be transmitted.

To make the description simpler, reference will be made to a main 4-level PAM (Pulse Amplitude Modulation) signal and supplementary information symbols will be assumed to be in binary format.

It is clear however that the system object of the invention can also be applied when: the number of levels of the main information is different from 4; frequency modulation or partial frequency modulation is effected; the supplementary information signal is not necessarily coded in binary symbols. Calling $\tau$ the mean time interval between the transmission of two successive symbols of a supplementary information signal and bearing in mind that T is the period of the symbol of the main information signal, we will denote by $r$ the ratio between the transmission rates of the two information signals:

$$r = \frac{T}{\tau} \qquad (1)$$

It is clear that to easily insert supplementary information signals, $r$ must be a rational number. The upper bound of $r$ is represented by the statistical frequency of occurrence of the modulable waveforms. Calling $p$ the probability that such modulable waveforms will be present in a time interval T, we must have, in order to transmit the supplementary information signal,

$$p > r \qquad (2)$$

so as to be sure that within a reasonably large number of symbols of the main information signals, we might make use of as many modulable waveforms as are the symbols of the supplementary information signal to be transmitted during a given time that corresponds to said number of main information symbols under consideration.

In practice it is advisable to adopt, for $r$, reasonably small values compared with the value of $p$, since in this way reliable safety margins may be obtained.

The ᴗsupplementary information signal is transmitted in the following way:

— the sequence of symbols of the supplementary information signal is sub-divided into blocks of $k'$ symbols (with integer $k'$);
— each block of $k'$ symbols of supplementary information signals is transmitted during an interval corresponding to N symbols of the main information signal; N being given by the relationship:

$$N = k' \cdot \frac{\tau}{T} = \frac{k'}{r} \qquad (3)$$

Interval NT will be hereinafter referred to as "frame interval" since the operations relating to transmission and reception of supplementary stream are periodically repeated with period NT.

— generally to make, as it will be seen hereinafter, synchronization of the receiving apparatus easier, or to introduce a redundant coding of the supplementary information signal, $k''$ symbols are added to each block of $k'$ symbols of the supplementary information signals, so that k supplementary symbols are actually transmitted during each frame interval having duration NT; k is given by the relationship:

$$k = k' + k'' \qquad (4)$$

For ease of description two specific examples will be considered wherein the following values have been chosen: $k'=8$, $k''=2$ and $k'=10$, $k''=0$.
Obviously in both cases we get k=10.

— Supplementary symbols are associated with the symbols of the main information signal corresponding to the extreme levels of the main signal,
— when a supplementary symbol has logic value "1" the waveform associated with the corresponding symbol of the main stream is modified by increasing its absolute amplitude by a given amount;

— when, on the contrary, a supplementary symbol has logic value "0" the waveform associated with the corresponding symbol of the main information stream does not undergo any modification;
— the correspondance between the supplementary information symbols and those of the main information signal is defined according to the following principle: in each frame interval the first k symbols of the main information signal corresponding to the extreme-levels are assigned to k symbols of the supplementary information to be transmitted; all the other symbols of the main information signal, regardless of the fact that they may or not correspond to extreme-levels, are not assigned to any supplementary information symbols and therefore the waveforms relating to them do not undergo any modification;
— if in a frame interval there is a number $k'''$ of modulable waveforms less than k, in such interval only $k'''$ supplementary symbols will be transmitted; at the receiving end the symbols that are not transmitted will be assigned a pre-determined logic value (which corresponds to an increase in the error probability of the supplementary stream depending on the values of p, N, k chosen while planning the system); the transmission during the other intervals does not undergo any modification, so that error propagation into the adjacent intervals is avoided.

The recovery of the supplementary information at the receiving side takes place as follows:

— the receiving apparatus is synchronized so as to allow detection, in each frame interval, of the first k symbols of the main stream assigned to extreme levels that may or not have been altered at the transmission end; the synchronization operating principles, objects of the present invention, will be expounded hereinafter,

— possible alterations to waveforms associated with said k symbols of the main stream are detected and the block of k' symbols of the supplementary stream transmitted during each time interval is reconstructed.

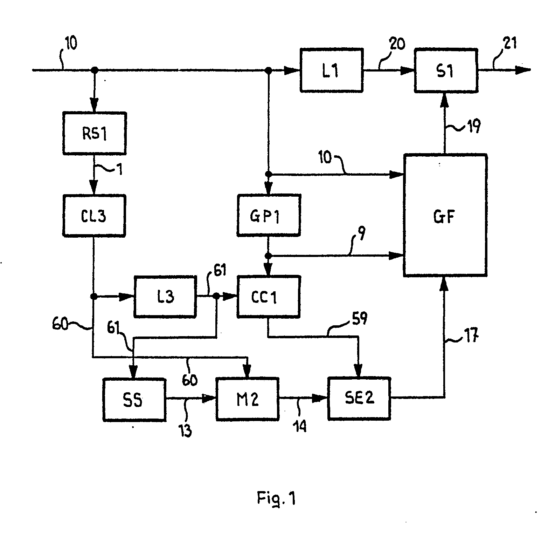

Referring now to Fig. 1, where GP1 denotes a standard pulse generator which receives at the input from a wire 10 the train of waveforms associated with the line symbols of the main information signal, and transmits at the output over a wire 9 a pulse in coincidence with any modulable waveform, i.e., a waveform which, according to the already cited principle, may be altered to add a symbol of the supplementary information signal.

RS1 denotes a conventional circuit for the recovery of synchronism from the main information signal present on wire 10; RS1 is capable of transmitting, over the output connected to wire 1, a pulse every T seconds.

CL3 indicates a conventional cylic counter capable of counting the pulses received at its input over wire 1, to indicate symbol frequency; CL3 is also able to transmit at its output over wire 60 a timing signal at the frame frequency of the supplementary information.

SS indicates in a general way the source of supplementary information whose symbol transmission rate is timed by a signal from a delay cell, that will be examined hereinafter, through wire 61. It will be clear from what has already been described that the number of binary symbols sent by SS over a connection 13, during each frame (duration NT) of the supplementary information signal, must be equal to the predetermined number k'.

M2 indicates a conventional buffer memory able to temporarily memorize the bits it receives in parallel from the connection 13 in accordance with the timing signal present on wire 60.

In the examples considered, (wherein k=10), M2, in dependence on the same timing signal it receives from wire 60, emits at its output, over connection 14, ten binary symbols during each frame interval. In a first example, that will be better described hereinafter, it will be assumed that the number k' of binary signals received by M2 from connection 13 is 8 and that in M2 there are two pre-wired binary signals, having logic value "1" that are added to the 8 symbols received from connection 13 so that the block of 10 binary symbols emitted over connection 14 has always a logic value "1" both in the most significant position, and in the least significant position. With reference to the latter example, that will be disclosed hereinafter, it will be assumed that the number k' of binary symbols received by M2 over connection 13 is ten, and that the same block of ten symbols is emitted afterwards by M2 on connection 14.

L3 indicates a conventional delay line able to delay the signal received from wire 60 by a time equal to the handling time required by M2.

CC1 denotes a conventional counter able to receive at its input, via wire 9, pulses to be counted starting from the instant in which the counter receives from L3 through wire 61, the delayed signal of frame timing, acting as a reset pulse; counter CC1 supplies, at its output via a connection 59, instant by instant, the total count attained.

The maximum count envisaged for CC1 is equal to k+1. When CC1 attains its own highest count, the pulses arriving at its input connected to wire 9 do not cause any further change in count until counter CC1 receives a reset pulse via wire 61.

SE2 denotes a conventional multiplexer which can be switched, by the signal it receives via an input connected to counter CC1, via connection 59, between the wires forming a connection 14 which is connected to another input of the multiplexer. When the bit configuration corresponding to the highest count of counter CC1 is present on connection 59, the output of multiplexer SE2 linked to wire 17 provides a logic value "0".

GF represents a conventional waveform generator which can receive at a first input connected to wire 10 the main information signal, at a second input connected to wire 9 the pulses transmitted by pulse generator GP1 and at a third input connected to wire 17, the signal coming from multiplexer SE2. As each pulse is received at the second input from generator GP1, GF emits, over the output connected to wire 19, a well-defined waveform whose sign is determined in accordance with the signal received at the first input and whose amplitude is determined in accordance with the signal received at the third input.

In the particular example here described, the amplitude of the waveform generated by GF is equal to zero when a logic level corresponding to binary digital symbol "0" is present at the third input connected to wire 17.

In the desciption below waveforms supplied by GF will simply be called "supplementary waveforms".

L1 indicates a conventional delay line able to delay the signal received from wire 10 by a time equal to the handling time required by the remaining parts of the apparatus.

S1 denotes a conventional analog adder which can add the waveform it receives from GF via wire 19, to the waveform of the signal it receives from delay time L1 via a wire 20.

Supplied from adder S1 is a signal on a wire 21, which contains both the main information signal and the supplementary information signal.

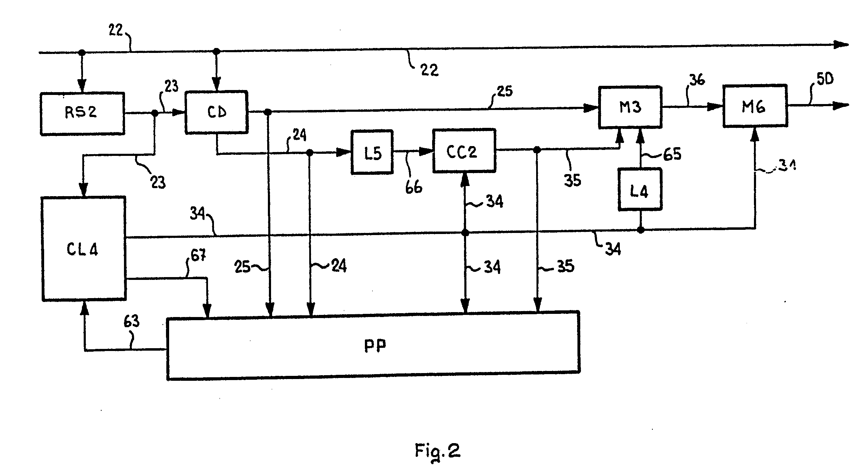

Referring now to Fig. 2, RS2 indicates a conventional synchronism recovery circuit, similar to RS1 shown in Fig. 1, and able to ensure synchronism recovery with the information signal received on wire 22 (Fig. 2).

RS2 emits as an output, via a wire 23, a pulse every T seconds.

CD indicates a conventional threshold decision circuit which can receive the information signal present on wire 22 and recognize, at a rate determined by the timing signal it receives from RS2 via wire 23, the symbol waveforms of the information signal exceeding a given number of predetermined thresholds. In this way circuit CD is able to detect, within the information signal, the modulable waveforms by comparing the waveforms of said signal with a first pair of thresholds.

CD is also able to decide whether said modulable waveforms have been altered by comparing the waveforms of said signal with u second pair of thresholds.

Circuit Cd therefore emits a pulse over the output connected to a wire 24 if it has detected a modulable waveform, and emits a pulse over the output connected to a wire 25 if said modulable waveform has been modulated in accordance with a logic value "1".

CL4 denotes a conventional cylcic counter capable of receiving a timing signal at its first input connected to wire 23 and a configuration of logic symbols, that serves to determine the duration of its counting cycle, at its second input connected with connection 63; CL4 is capable of emitting over its first output, connected to wire 34, a pulse at each completion of its counting cycle and is also capable of emitting over its second outputs connected to connection 67, a configuration of digital symbols instantaneously corresponding to the attained counting value.

L4 represents a conventional delay line able to receive pulses at its input connected to wire 34 and able also to emit them at the output over wire 65 after introduction of a delay equal to about the memorizing time into memory M3, that will be examined later.

L5 represents a conventional delay line able to receive pulses at its input connected to wire 24 and able also to emit them at the output over wire 66 after introduction of a delay equal to about the memorizing time of pulses present on wire 25 into memory M3, that will be examined later.

CC2 indicates a conventional binary counter, able to receive at its first input connected to wire 66 the pulses to be counted, and to receive at its second input, connected to wire 34, a reset signal: CC2 is able to generate at its output, via a connection 35, a bit configuration indicating the attained counting value.

The maximum number of states envisaged for CC2 is k+1 (0 to k enclosed). When CC2 attains its highest count, the pulses present at its first input connected to wire 66 do not cause further change in its count until CC2 receives a reset pulse over wire 34.

M3 indicates a memory made up of a number of cells equal to k. The writing in the cells of memory M3 is in ordered succession in accordance with timing provided by the signal coming from counter CC2 over connection 35; when connection 35 carries the bit configuration corresponding to the highest count of CC2 none of the cells of M3 is connected for writing so that no further data is written into M3; memorized data is always available at the output of M3 on connection 36; the simultaneous reset of all the cells of M3 is accomplished by a signal from L4 through wire 65.

M6 denotes a conventional buffer memory able to receive at its input from connection 36 a binary configuration and to transfer said configuration at the output over connection 50, in correspondence with the pulses of the signal it receives at its second input connected to wire 34.

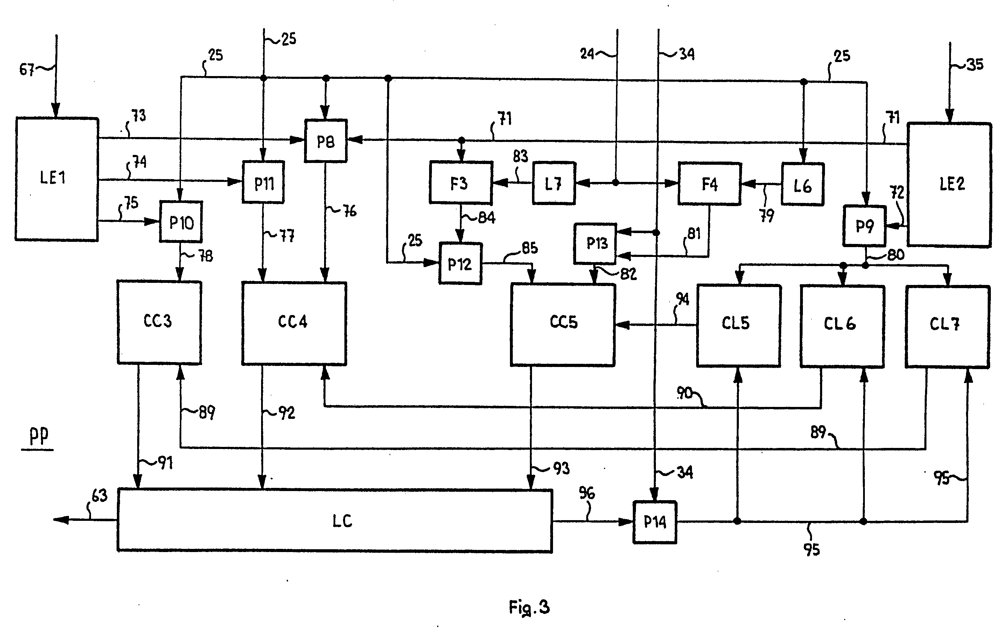

PP indicates a logic circuit of the sequential type, whose operation will be described hereinafter in connection with Fig. 3; depending on the signals it receives at its inputs via wires 35, 67 and via wires 24, 25, 34 PP emits at the output, over a wire 63 a binary configuration that determines the duration of the counting cycle of CL4.

In Fig. 3, P8 denotes a conventional logic AND gate able to receive pulses at its first input connected to wire 25 and also able to emit them at the output via wire 76 when both the signals present on its second and third inputs, connected to wires 71 and 73 respectively, are at logic value "1".

P9, P10, P11, P12, P13, P14 denote conventional logic AND gates having two inputs and one output whose operations will be examined hereinafter.

LE2 denotes a conventional combinatory logic circuit able to receive at its input from connection 35 a binary configuration corresponding to the counting value attained by CC2 (Fig. 2). LE2 (Fig. 3) is able to emit at its first output connected to wire 71, a logic "0" if the counting value attained by CC2 is less than the number of k supplementary symbols to be transmitted during each frame and to emit a logic "1" if the counting value attained by CC2 is higher than or equal to k.

LE2 is also able to emit at a second output connected to wire 72, a logic "1" if the counting value attained by CC2 is equal to 0 or to k−1.

LE1 denotes a conventional combinatory logic circuit able to receive a binary configuration at its input from connection 67 and to emit: over its first output, connected to wire 73, a logic "1" only if the input binary configuration corresponds to a number included within a first pre-determined pair of numbers N1, N2, extremes included; to emit over a second output connected to wire 74, a logic "1", only if the binary configuration at the input corresponds to a number comprised within a second predetermined pair of numbers N3, N4, extremes included; to emit over a third output connected to wire 75, a logic "1" only if the binary configuration at the input corresponds to a number comprised within a third pre-determined pair of numbers N5, N6, extremes included.

F3 indicates a conventional bistable circuit able to emit at its output, over wire 84 a logic "1" acting as enabling signal for gate P12, after each transition from logic "0" to "1" of the signal it receives at its first input connected to wire 71 and to emit a logic "0" after each pulse it receives at its second input connected to wire 83.

F4 denotes a conventional bistable circuit able to emit to its output over wire 81 a logic "1" acting as enabling signal for gate P13, after each pulse it receives at its input connected to wire 79 and able to emit a logic "0" after each pulse it receives at its second input connected to wire 24.

L6 and L7 denote two conventional delay lines arranged to introduce a well-defined delay on the signals coming from wires 25 and 24 respectively; the function of said delays will be examined hereinafter.

CC3 indicates a conventional counter able to receive at the input from wire 78 the pulses to be counted, starting from the instant when it receives a reset pulse from wire 89, and able also to constantly transfer to its outputs, via connection 91 the attained counting value at each instant.

CC4 denotes a conventional up/down counter able to receive at its input: via wire 90 reset pulses, from wire 76 counting up pulses and from wire 77 counting down pulses, able also to constantly transfer to its output, via connection 92, the attained counting value instant by instant.

CC5 denotes a conventional up/down counter able to receive at its input from wire 94 reset pulses, from wire 85 counting up pulses (that make it advance) and from wire 82 counting down pulses and able also to constantly transfer to its outputs, on connection 93, the attained counting value at each instant.

CL5 denotes a conventional cyclic counter of modulus H5, said value will be described hereinafter, able to receive at its input, via wire 80, pulses to be counted and from wire 95 reset pulses, and able also to transfer to the output on wire 94, a pulse whenever it recovers its initial condition or in dependance of a reset pulse it receives from wire 95 or when its counting cycle is over.

CL6 and CL7 denote two counters analogous to CL5, but with different moduli H6, H7 respectively and with their outputs connected to wires 90 and 89 respectively.

LC denotes a conventional combinatory logic circuit able to transfer to its output on connection 63 the attained counting value corresponding to the cycle of counter CL4 (Fig. 2) and a logic binary value via wire 96 dependant on the counting value attained by counters CC3, CC4 and CC5 (Fig. 3) it receives at its input from connections 91, 92 and 93 respectively. The correspondence between inputs and outputs is indicated in the following Table:

| Inputs | | | Outputs | |
| Numbers over connections: | | | Number over connection: | Logic value one wire: |
|---|---|---|---|---|
| 91 | 92 | 93 | 63 | 96 |
| $n_{91} < H1$ | $-H2 < n_{92} < H2$ | $-H3 < n_{93} < H3$ | S0 | "0" |
| $n_{91} \geqslant H1$ | $-H2 < n_{92} < H2$ | $-H3 < n_{93} < H3$ | S0+S1 | "1" |
| X | $n_{92} \geqslant H2$ | $-H3 < n_{93} < H3$ | S0+S2 | "1" |
| X | $n_{92} \leqslant -H2$ | $-H3 < n_{93} < H3$ | S0-S2 | "1" |
| X | X | $n_{93} \geqslant H3$ | S0+S3 | "1" |
| X | X | $n_{93} \leqslant H3$ | S0-S3 | "1" |

Table 1: correspondence between inputs and outputs of LC (Fig. 3) wherein:

$n_{91}$, $n_{92}$, $n_{93}$: represent the numbers represented by the signals present on connections 91, 92, 93 respectively,

H1,±H2,±H3 are threshold values for numbers $n_{91}$, $n_{92}$, $n_{93}$, respectively, whose dimensioning will be examined hereinafter,

S0: is the counting value attained by CL4 (Fig. 2) in steady state condition;

S1, S2, S3: are increments of S0 that will be examined hereinafter;

X: means "don't care" (whatever its value may be).

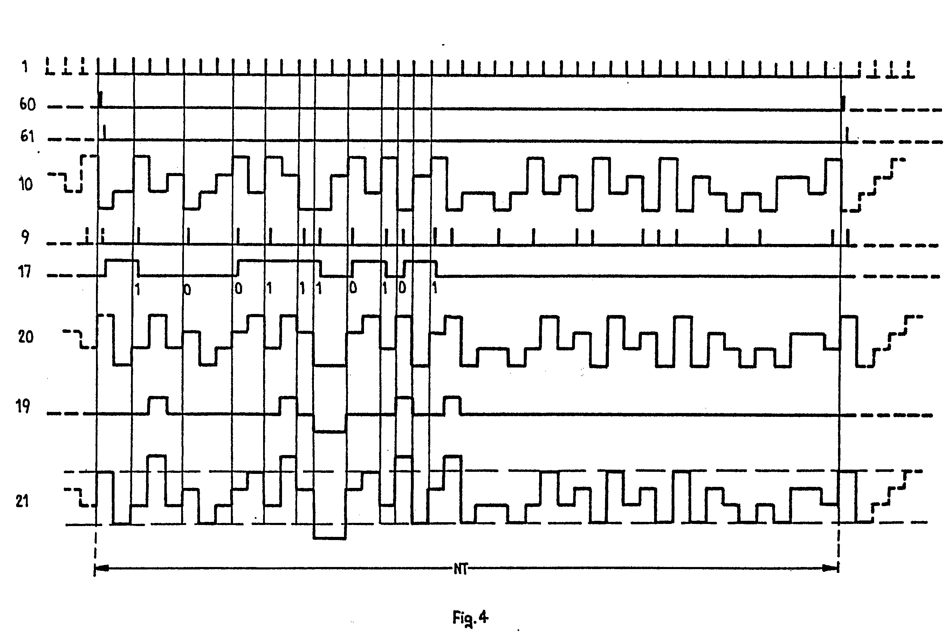

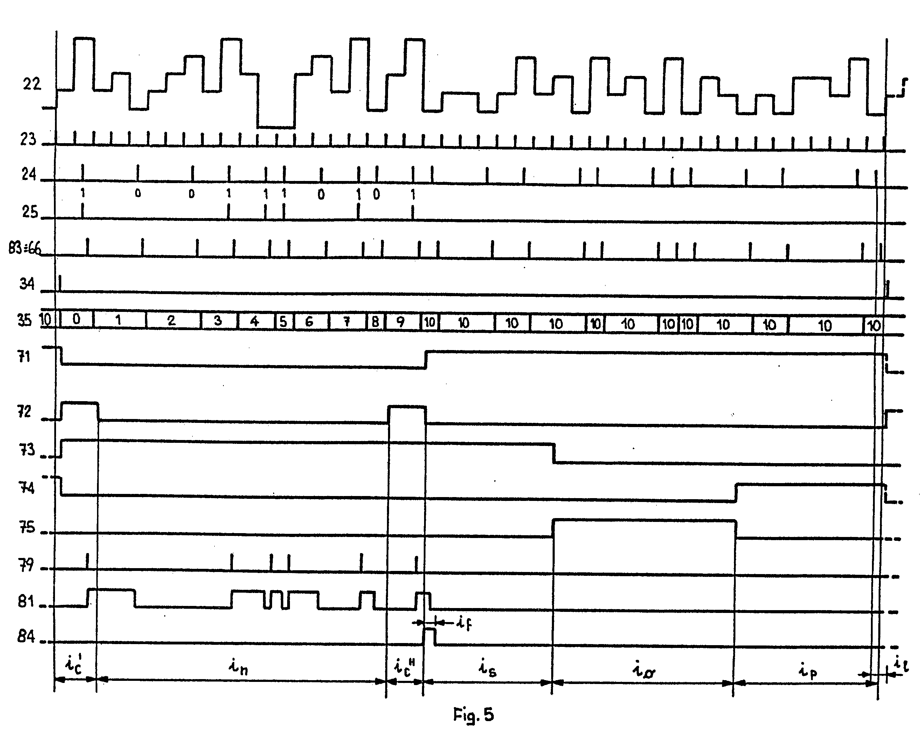

In the description of Figures 4, and 5, that represent waveforms and signals present over

**0 037 556**

the wires and connections represented on Figures 1, 2 and 3, said waveforms and signals will be labelled in the same way as wires and connections on which they are present. Fig. 4, shows a particular example of the transmission, in a frame interval having duration NT, of a block of ten binary symbols (bit) of a supplementary information signal and consisting of the following succession

1 0 0 1 1 1 0 1 0 1

This succession may be interpreted both as the combination of the information of the 8 bits 00111010 to which two bits "1" have been added at the beginning and at the end in order to make the acquisition of synchronism easier, as it will be seen hereinafter, and as a particular case of a block of ten significant bits of the supplementary information in which the first and the last bits have logic value "1".

Signal 1 (Figures 1 and 4) is a periodic timing signal with period equal to the symbol period T of the main information.

Signal 60 serves to time memory M2.

Signal 61 serves to reset the counter CC1 and to time source SS.

Signal 10 is the waveform assumed for the main information signal; signal 9 is formed by a series of pulses which appear in coincidence with the modulable waveforms of signal 10. Signal 17 carries the block of ten supplementary bits (already examined) to be transmitted in the following way. After each pulse of signal 9, signal 17 takes on the logic value corresponding to the bit of the supplementary information signal to be transmitted in coincidence with the subsequent pulse of signal 9. Signal 19 is the signal representing the supplementary information, to be added to signal 20 which corresponds to the main information signal 10 delayed by a time which in the drawing, is equal to a symbol period of the main information signal.

Lastly, signal 21 represents the signal combining both the main information and the supplementary information, and is present on wire 21 at the output of the transmitting apparatus of Fig. 1.

Fig. 5 shows, in a similar manner to that adopted in Fig. 4 the shapes of the signals present on wires 22, 23, 24, 25, 66, 34, 35, 71, 72, 73, 74, 75, 79, 81, 83, 84 of the receiving apparatus (Figs 2 and 3) as a consequence of the reception of the particular block of ten supplementary bits associated with a particular waveform of the main stream, already examined when investigating the transmitting apparatus. In particular, waveforms of signals 66, 83 are identical.

The binary configurations present on connection 35 are represented in Fig. 5, by simply indicating the numbers in decimal notation which are represented by said configurations and correspond to the counts reached by counter CC2 (Fig. 2) at the instants marked by the pulses of signal 24 (Fig. 5); it has been assumed, in accordance with the particular example here described, that said counter has 11 counting positions only and therefore, once number 10 is attained the counter stops.

Signal 22 is the received signal, and corresponds to signal 21 shown in Fig. 4; signal 23 (Fig. 5) is the basic clock signal having a frequency equal to the symbol frequency of the main information signal and is derived from RS2 (Fig. 2).

Signal 24 (Fig. 5) is formed of a series of pulses which appear in coincidence with the modulable waveforms of signal 22; signal 25 is formed of a series of pulses which appear in coincidence with those modulable waveforms which have been altered by the supplementary modulation of signal 22.

Signal 66 is signal 24 delayed by L5 (Fig. 2) and carries the pulses which are to be counted by CC2; signal 34 (Fig. 5) serves for frame synchronism and more particularly performs as a reset signal for CC2.

Signals 71, 72, 73, 74, 75, 81, 84 are enabling signals for logic AND gates as will be described later.

Signal 79 is signal 25 delayed by L6.

Signal 83 whose trend is equal to that of signal 66, acts as reset signal for F3 (Fig. 3).

The description of the operation of the device, object of the invention, will now be described, firstly for the transmitting apparatus and then for the receiving apparatus.

In accordance with the assumptions made in connection with Figs. 4, 5 the particular case will be now described of transmission, in a frame interval, of the block of 10 supplementary bits 1001110101 to be transmitted, said block will be referred to, from now on, as "supplementary block".

In connection with Figs. 1 and 4 in correspondence with the instant of the beginning of the frame interval NT counter CL3 emits a pulse via wire 60. Said pulse controls memorization in M2 of the supplementary block present on connection 13.

Said supplementary block, delayed by a time equal to processing time of M2, is made available at the output, on connection 14, and may be possibly completed by two bits "1" located at the beginning and at the end.

The pulse present on wire 60 is delayed in delay cell L3 by a value equal at least to processing time of M2, but much less than symbol period T, and is emitted via wire 61.

The pulse present on wire 61 controls the reset of CC1 and the emission effected by SS of a new bit configuration on connection 13.

Counter CC, reset by the pulse present on wire 61 positions selector SE2 on the input connected to that particular wire of connection 14, which carries the first bit of the supplementary block; in the particular case examined here said bit has logic value "1" as illustrated at the row 17 of Fig. 4.

The first pulse present on wire 9, generated by GP1 after CC1 has been reset, controls the generation of the first supplementary waveform (signal 19 of Fig. 4); said first supplementary waveform is represented by a pulse of positive sign, having duration T since the corresponding symbol of the main information signal on wire 10 is positive, and the modulation takes place through a simple summing operation in S1, in the ways described above.

To correctly accomplish this modulation, synchronism is required between the pulse on wire 19 and the corresponding symbol waveform of the main information signal; therefore, the signal present on wire 10 is delayed in L1 by a time equal to that required for the generation of the pulse on wire 19 and is subsequently sent to adder S1 over wire 20.

Furthermore the first pulse on wire 9 causes in CC1 the count to be advanced by unity and, consequently, according to the bit configuration supplied by CC1 on connection 59, causes the positioning of SE2 on the input linked to a particular wire of connection 14 which carries the second bit of the supplementary block to be transmitted; in this particular case this second bit has logic value "0", as indicated on row 17 of Fig. 4.

In coincidence with the second pulse present on wire 9, the second bit of the supplementary block is transmitted, in a similar manner to the transmission of the first bit; the only difference lies on that the logic value "0" in question has been transferred from SE2 on wire 17 to GF which does not generate any waveform, and S1 adds a zero signal to the signal present on wire 20 so that the signal present on wire 20 passes completely unaltered on to the wire 21.

The same procedures apply to all the remaining bits of the supplementary block. It is to be noted that the fifth and sixth bits of said supplementary block have logic value "1" but are transmitted by means of the generation in GF of negative pulses; since said bits are transmitted by altering the waveforms corresponding to extreme negative levels of the signal relating to the main information signal according to modulation principles expressed above.

Once the last bit of the supplementary block has been transmitted, which in our example is the tenth bit, as mentioned above, selector SE2 emits at its output on wire 17 a logic value "0", being positioned by counter CC1 to an input which supplies a constant logic value "0" provided in a pre-wired form in this example; as already said the logic value "0" transferred from SE2 to its output on wire 17 disables GF for the emission of waveforms so that the signal present on wire 20 passes on to wire 21 without any alteration.

Such operation continues up to the end of frame interval NT, and precisely till the instant at which the second pulse appears on wire 60 and detects the beginning of the successive frame.

The operation of the receiving apparatus will be now decribed in connection with Figures 2, and 5, under the hypothesis that signal present on wire 21 (Fig. 1) of the transmitting apparatus may be received on wire 22.

For the moment, the receiving apparatus has been assumed to be already in condition of normal frame alignment, i.e., in a steady state condition, it will be described later how the receiving apparatus has to act to detect the condition of out-of-alignment and to recover the steady state of normal alignment.

Circuit RS2 (Fig. 2) derives a timing signal from the signal present on wire 22. This timing signal has a period T equal to the symbol period of the main information signal, and is sent over wire 23 towards circuit CD and counter CL4.

CL4 is timed by the signal present on wire 23 to send a pulse every time its counting cycle is over. The duration of said cycle is determined by the bit configuration received by CL4 at its input, connected to connection 63. In a steady state condition the duration of the cycle of CL4 is equal to NT.

The pulses present on wire 34, identify the beginning of the frame at the receiving end.

The pulse at the beginning of each frame causes CC2 to reset and controls the storage in M6 of the supplementary block received during the preceding frame.

Such block in fact, as will be described hereinafter, is present at the input of M6, that is connected to connection 36, and is transferred onto the output over connection 50.

The pulse present on wire 34 is delayed in L4 by a time equal at least to the processing time of M6, but much less than symbol period T, and is emitted onto wire 66. The pulse present on wire 65 causes memory M3 to reset.

Counter CC2, that has been reset, as described, by the pulse present on wire 34, enables through the binary configuration present on its output connected to connection 35, the first cell of memory M3 to receive a pulse, to be stored, coming from CD through wire 25.

Circuit CD, depending on the timing signal it receives from RS2 via wire 23 and on the signal it receives via wire 22, recognizes the modulable waveforms, and sends on wire 24 a pulse in coincidence with each modulable wavefrom recognized; in addition, CD sends on wire 25 a pulse in coincidence with each altered modulable waveform modulated by means of a logic value "1", as indicated in Fig. 5 on rows 24, 25.

The pulses present on wire 24 are delayed in L5 by a time which is equal at least to the memorizing time of M3, but much less than symbol period T, and are emitted over wire 66.

Each pulse present on wire 66 causes CC2 to advance by a counting step till CC2 attains the envisaged maximum counting value.

The counting reached by CC2 is indicated, instant by instant in binary code by the signals present on connection 35 and addresses step by step the cells of memory M3.

In this way, as already described, beginning from the start instant of each frame, the first cell of M3 is addressed first (reset of CC2); then the first pulse present over wire 66 causes the number of counts of CC2 to advance from 0 to 1 causing the second cell of M3 to be addressed; the second pulse of wire 66 will cause the third cell of M3 to be addressed, and so on till the kth cell of M3 is addressed, what happens after the (k—1)th pulse present on wire 66.

After the kth pulse is present on wire 66 the counting value reached by CC2 is equal to k and corresponds to no cell of M3; the content of M3 is no longer altered to the start of the successive frame since, as already stated, the following pulses, CC2 receives from wire 66, do not cause further modifications of its state to the successive reset of CC2.

The operation of logic circuit PP will be now described with references to Figures 2, 3 and 5.

Logic circuit LE2, depending on the counting value reached by CC2 and received over connection 35, emits two enabling signals for gates P8 and P9.

In the example described here the enabling is assumed to correspond to logic value "1".

The enabling signal emitted via wire 71 towards P8 takes on logic value "1" for the whole time during which the counting value attained by CC2 is equal to its highest value foreseen that in the adopted example corresponds to value k=10; the enabling signal emitted over wire 72 towards gate $P_9$, takes on logic value "1" when the counting value attained by CC2 is equal to 0 or to k=1.

In each frame two time intervals $i_c'$ and $i_c''$ are provided in which signal 72 has logic value "1". Between $i_c'$ and $i_c''$ there is a time interval $i_n$ in which, in a steady state condition, the bits of the supplementary block appear with the exception of the extreme bits. Time intervals $i_c'$ and $i_c''$ correspond to the time intervals in which the extreme bits of the supplementary block occur. The sum of the intervals $i_c'$ and $i_c''$ will be later referred to as $i_c$.

Analogously logic circuit LE1, depending on the attained counting value, which hereinafter will be marked by N67, obtained by CL4, which LE1 receives from connection 67, emits, as mentioned, three enabling signals over wires 73, 74, 75 for gates P8, P11, P10 respectively. Said three enabling signals identify three time intervals within the supplementary frame.

Said three time intervals can in a general case be contiguous, separate, or partially overlapping according to the characteristics that are specified for the apparatus while planning it. To make the description simpler said time intervals are assumed to be contiguous. Under this assumption the enabling signal for P8 takes on logic value "1" when condition $N1 \leqslant N67 \leqslant N2$ occurs on the assumption that N1 corresponds to the counting value attained by CL4 in correspondance with the start instant of the supplementary frame and indicating by N2 a number predetermined while planning the system. The time interval during which gate 8 is enabled, as signals 71 and 73 have logic "1", will be indicated by $i_s$ hereinafter.

The enabling signal for P11 takes on logic value "1" when condition $N67 \geqslant N3$ occurs, since N3 denotes a number predetermined while planning the system and assumed to be greater than N2, i.e. $N3 > N2$. Obviously in each frame said enabling signal 74, once it has attained logic "1", keeps it to the frame end. The time interval during which signal 74 has logic value "1" will be indicated by $i_p$ hereinafter.

The enabling signal for P10 takes on logic value "1" where $N2 < N67 < N3$.

In this particular case, therefore $N5 = N2 + 1$ and $N6 = N3 - 1$.

Reference $i_c$ will denote the time interval during which enabling signal 67 has logic value "1". The duration of $i_o$ is constant being equal to a predetermined number of count steps of CL4. Of course the duration of the other intervals may vary frame by frame, since the beginning and the end of said intervals are dependent on the occurrence of modulable waveforms. However, the addition of time intervals $i_c$, $i_m$, $i_s$, $i_o$, $i_p$ is equal to the duration of the count cycle of CL4.

The operation of bistable circuits F3 and F4, that emit enabling signals for gates P12 and P13 respectively, has already been described.

Reference $i_f$ (Fig. 5) will denote the time interval during which the enabling signal 84 for gate P12 takes on logic value "1".

Said interval $i_f$ starts at the end of interval $i_c''$ and ends with the occurrence of the first modulable waveform after the beginning of $i_f$, but with the delay introduced by L7 (Fig. 3).

According to the operations of blocks F4, L6, P13 described above, a time interval, denoted by $i_l$ (Fig. 5) may be assumed in which the last modulable waveform, occurring before the end of interval $i_p$, occurs.

It is to be pointed out that, unlike all the other intervals, already examined, interval $i_l$ is fictitious, i.e. its beginning and its end are not placed in correspondence with any waveform. However, reference has been made to interval $i_l$ to make the description easier. In fact if the modulable waveform occurring during interval $i_l$ is altered, a count pulse for counter CC5 is emitted at the output of P13 (Fig. 3) connected to wire 82.

Counters CL5, CL6, CL7 count the number of altered modulable waveforms occurring during interval $i_c$. In fact the pulses present on wire 80 are nothing but the pulses emitted by CD on wire 25 that pass through gate P9 when it is enabled.

In the same way counter CC3 counts the number of altered modulable waveforms occurring during time interval $i_o$.

Counter CC4 positively counts (i.e. increases its actual value) the number of altered modulable waveforms occurring during time interval $i_s$ and negatively counts (i.e. decreases its actual value) the number of altered modulable waveforms occurring during time interval $i_p$.

Counter CC5 working as already examined in conjunction with F3, F4, L6, L7, P12 and P13 positively counts the number of alternations found out on the last modulable waveform occurring in each frame after the start of time interval $i_s$, and negatively counts the alterations found out on the last altered modulable waveform occurring during each frame before the end of $i_p$.

In fact gate P12 is enabled by F3 at the beginning of $i_s$ and is disabled by the pulses corresponding to the detection of modulable waveforms coming from wire 24 with a delay, determined by L7, that allows the passage along wire 85 of a pulse that may be present on wire 25.

On the other side gate P13 is enabled by F4, with the delay due to L6, by pulses corresponding to the detection of altered modulable waveforms and is disabled by the pulses coming from wire 24, corresponding to the detection of modulable waveforms

Therefore, the pulse present on wire 34 (occurring in coincidence with the end of interval $i_p$) can pass onto wire 82 through gate P13, only if the preceding modulable waveform was altered too.

The principles of operation of circuit PP, described in Fig. 3, are based on the comparison of statistical frequencies at which altered modulable waveforms occur in intervals $i_c$, $i_s$, $i_o$, $i_p$. In particular, interval $i_c$ is that in which, in a steady state condition altered modulable waveforms systematically appear, while during intervals $i_s$, $i_c$, $i_p$, in a steady state condition, altered modulable waveforms do not appear unless in presence of transmission errors.

In the particular case described in Fig. 3 counters CC3 and CL7 compare the statistical frequencies of the altered modulable waveforms that may occur in time intervals $i_c$ and $i_o$ respectively.

In fact, starting from the instant at which CL7 is reset by a pulse coming from wire 95 and, as a consequence, resets CC3 by sending a pulse over wire 89, CL7 and CC3 count the modulable waveforms occurring during intervals $i_c$ and $i_o$ respectively. The result of the counting value reached by CC3 is sent, through connection 91, to logic circuit LC.

In a steady state condition if the supplementary block contains at the beginning and at the end two bits having logic value "1", count of CL7 is incremented by two unities at each frame, while count of CC3 is incremented only in case of possible transmission errors.

Modulus H7 of CL7 and threshold value H1, reported in the Table, will be chosen while planning the system so that, under these conditions, the probability that CC3 will reach the counting value H1, before the attained counting value of CL7 has exceeded H7, is sufficiently low.

So in steady state condition the probability that logic LC may increment by value S1 the counting cycle assigned to CL4 (Fig. 2) through signals emitted on connection 63 is low.

Let us consider now the operation of the receiving apparatus during the transients of frame alignment recovery, starting from an out-of-alignment condition.

Let us suppose now that the counting period of CL4 is outphased with respect to the counting period of CL3 (Fig. 1) by a time period such that the transmitted supplementary block arrives at the receiving end during interval $i_o$. In this case the attained counting value of CL7 (Fig. 3) is incremented only in case of possible transmission errors while the attained counting value of CC3 is incremented during each frame by a number equal to the number of bits having logic value "1", in the transmitted supplementary block.

The values of H1 and H7 will be chosen so that, under these conditions, the probability that CC3 will reach the counting value H1, before the attained counting value of CL7 exceeds H7, is very large.

So the conditions reported on the second row of the Table will occur and LC will emit on connection 63 number S0+S1 and will also emit a logic value "1" onto wire 96.

Under these conditions the counting cycle of CL4 is lengthened by lengthening $i_p$ by the amount S1, that will be chosen while planning the system equal to about the mean number of symbol periods T of the main signal which, in steady state conditions, are contained in the time interval that goes from the central point of $i_o$ to the end of $i_p$.

At the end of its own lengthened counting cycle, CL4 will emit a pulse onto wire 34 that, through enabled gate P14 (Fig. 3), will cause the reset of counters CL5, CL6, CL7 and consequently the reset of counters CC3, CC4, CC5.

Counters CC4 and CL6 co-operate in a similar way to detect and correct a possible out-of-alignment state of counter CL4 (Fig. 2) such that the transmitted supplementary block may take place during interval $i_s$ or during interval $i_p$.

In fact, while planning the system, threshold value H2 relating to the number, emitted by CC4 (Fig. 3) on connection 92, and modulus H6 of counter CL6 will be chosen so that in steady state condition the probability that the count number of CL6 exceeds H6, before the count number of CC4 may reach values +H2 or −H2, is high.

On the other hand H6 and H2 will be chosen so that when the supplementary block occurs in the interval $i_s$, there is a high probability that counting value of CC4 may reach H2 before CL6 exceeds value H6.

When CL6 exceeds H6, it resets itself and at the same time resets also CC4. In this case counting cycle of CL4 (Fig. 2) is not altered when, on the contrary, CC4 (Fig. 3) reaches or exceeds the number of counts H2, what corresponds to the fact that supplementary block occurs during interval $i_s$, the conditions corresponding to the third row of the Table take place and logic LC emits onto connection 63 number S0+S2, and onto wire 96 logic value "1".

Under these conditions the counting cycle of CL4 is lengthened, by lengthening of time interval $i_o$ or of time interval $i_p$, by the amount corresponding to S2, that will be chosen while designing the system to optimize the acquisition time of synchronization conditions. In particular unitary value can be assumed for S2 (i.e. S2=1).

At the end of its own lengthened counting cycle CL4 emits a pulse onto wire 34 that, as already described, determines reset of counters CL5, CL6, CL7, CC3, CC4, CC5.

When finally CC4 attains value —H2 or exceeds it negatively (with negative sign), which corresponds to the fact that the supplementary block occurs during interval $i_p$, the conditions corresponding to the fourth row of the Table occur and logic LC emits on to connection 63 number (S0—S2) and on to wire 96 logic level "1".

Under these conditions the counting cycle of CL4 relating to the following frame is shortened. One of the possible ways to get such shortening may be; obtained by forcing counter CL4 to jump a number of counting steps equal to S2 at the beginning of the subsequent frame, on the basis of the number (S0—S2) that CL4 receives from LC through connection 63.

Counter CC5 and CL5, co-operate in a way perfectly analogous to what already examined for pair CC4 and CL6.

More particularly in this case it has to be considered that; the threshold values for the attained counting value of CC5 are equal to +H3 and —H3, the modulus of counter CL5 is H5 and lengthening and shortening of the counting cycle of CL4 will be equal to value S3.

So far it has been assumed for ease of description that only one of counters CC3, CC4, CC5 might exceed at a given instant the relative threshold values.

In practice more than one of them may have exceeded one of its threshold values.

Obviously it is not a problem to design logic LC so as to assign a predetermined priority to different conditions; as a particular case, in the Table maximum priority has been given to threshold exceeded conditions attained by CC5 and a priority of second order to those reached by CC4. Priority conditions are given evidence in the Table by the insertion of symbols X ("don't care") in columns 91 and 92.

It has to be pointed out that for ease of description reference has been made to a supplementary block characterized in that: both its most significant and least significant bits have logic value "1".

However the apparatus, object of the invention, is also able to operate even if transmitted supplementary blocks do not systematically have bits with logic value "1" at the beginning and at the end of the supplementary block, but only irregularly.

In that case, in steady state condition, counters CL5, CL6, CL7 no longer systematically increment their attained counting value but they increment it at the statistical frequency of occurrence of bits of logic value "1" at the beginning or at the end of the supplementary block.

Analogously, under the out-of-alignment conditions, counter CC3, CC4 and CC5 will be no longer incremented systematically, but depending on the statistics of bits having logic value "1" occurring during the intervals relating to said counters.

What is required is that threshold values for counters CC3, CC4, CC5 and moduli of counters CL5, CL6, CL7 must be sized depending on the statistical frequency at which bits of logic level "1" occur in different positions of the supplementary block.

It has been assumed till now that the supplementary block consists of 10 bits, but it can obviously consist of any suitable number of bits. More particularly it can also consist of a single bit, that will have logic value "1" with statistical frequency depending on the characteristics of the information associated to the supplementary stream.

In that case interval $i_n$ will be reduced to zero and intervals $i_c'$ and $i_c''$ will coincide.

It has to be pointed out that the subdivision of frame interval NT into the intervals $i_c$, $i_n$, $i_s$, $i_o$, $i_p$ examined above is not compulsory and has been given only to make the description simpler.

Generally the subdivision can be effected into a different number of intervals causing each of them or a pair of them to correspond to a pair of counters.

Each pair of counters together with associated circuits, will be able to operate in the ways already examined for the pairs CC3—CL7, CC4—CL6, CC5—CL5.

**Claims**

1. A method of frame synchronization of a supplementary information signal organized into blocks within predetermined time intervals (supplementary frame intervals), added in transmission to a main multilevel signal by altering the waveforms corresponding to the extreme levels of the main signal (modulable waveforms) by means of level division multiplexing (LDM), and recovered by opposite procedure in reception, characterized in that the synchronization of the receiving apparatus with the exact frame timing is effected by changing the duration of the counting cycle that scans the timing of the said frame on the basis of the number of the altered modulable waveforms detected within suitable time intervals (i) into which the frame interval is subdivided in reception; said duration of the counting cycle being lengthened when the number of altered modulable waveforms, that take place after the interval of reception of said supplementary information signal, is greater than the number that would be provided for by transmission error statistics; said duration of the counting cycle being on the contrary shortened when said greater number of altered modulable waveforms occurs before said interval of reception of the supplementary information signal.

2. The method of frame synchronization according to claim 1, characterized in that said blocks (supplementary blocks) consist of a predetermined number of supplementary information bits and of two bits having logic value "1", one of them being placed in the most significant position and the other in the least significant position of the supplementary block.

3. The method of frame synchronization according to claim 1, characterized in that said supplementary blocks exclusively consist of a predetermined number of bits of supplementary information.

4. The method of frame synchronization according to claim 3, characterized in that said supplementary blocks consist of a single bit of supplementary information.

5. The method of frame synchronization according to claim 1, characterized in that in the steady state condition a first series of said intervals (i), into which the supplementary frame interval (NT) is subdivided in reception, comprises intervals ($i_o$, $i_p$) having constant and predetermined duration, a second series ($i_s$, $i_c + i_n$) consists of intervals having variable duration as their instant of beginning or end is variable depending on the detection of modulable waveforms, a third series consists of intervals ($i'_c$, $i''_c$, $i_f$, $i_l$) having variable duration so that a predetermined number of modulable waveforms, taking a predetermined counting position, occur at each of said intervals of said third series, the intervals of said third series if that is the case overlapping those of the other series.

6. The method of frame synchronization as in claims 1, 5, characterized in that in said intervals ($i'_c$, $i''_c$, $i_f$, $i_l$) of the third series of variable duration there is a single modulable waveform per supplementary frame.

7. The method of frame synchronization as in claims 1, 5 characterized in that a first set of said time intervals (i), into which the supplementary frame (NT) interval is subdivided in reception, consists of two intervals ($i'_c$, $i''_c$), belonging to said third series, predetermined so that, under conditions of reached synchronization (steady state), the modulable waveforms are present carrying the extreme symbols of the supplementary block; a second set consists of intervals ($i_n$), they too belonging to the third series, in which, in the steady state condition, the modulable waveforms are present carrying the remaining symbols of the supplementary block; a third set consists of intervals ($i_s$, $i_o$, $i_p$, $i_f$, $i_l$), each belonging to any one of the above mentioned series in which in the steady state condition no modulable waveform occurs carrying symbols of supplementary block.

8. The method of frame synchronization according to claims 1, 4, 6, 7, characterized in that said two intervals ($i'_c$, $i''_c$) forming said first set are coincident.

9. Apparatus for frame synchronization, comprising a recovery circuit (RS2) of the symbol frequency (1/T) of the received signal and a threshold decision circuit (CD) timed by that symbol frequency (1/T) and having first and second outputs (24, 25), these circuits being associated with the combination of a first cyclic counter (CL4), a second counter (CC2), first and second memories (M3, M6) and a logic circuit (PP), characterized in that, for carrying out the method of claim 1:

— the threshold decision circuit (CD) is able to recognize the waveforms of the main signal corresponding to extreme levels (modulable waveforms) by comparing said waveforms with a first pair of thresholds and by emitting from a first output (24) a pulse at each occurred detection, and able also to recognize the modulable waveforms that have been altered in transmission by comparing said modulable waveforms with a second pair of thresholds and by emitting onto a second output (25) a pulse for each altered modulable waveform recognized;

— the first cyclic counter (CL4) is able to generate the frame timing, depending on the symbol frequency (1/T) it receives from said recovery circuit (RS2), emitting from a first output (34) a pulse at each completion of its counting cycle and from a second output (67) a binary configuration corresponding, instant by instant, to the reached counting value, able also to modify the duration of its counting cycle depending on a configuration of logic symbols it receives from a logic circuit (PP) of the sequential type;

— the second counter (CC2) which is a k+1 states binary counter is arranged to be reset by the pulse it receives from the first output of said cyclic counter (CL4), and to count the pulses it receives, through a first delay line (L5), from the first output (24) of said decision circuit (CD) and to emit at the output (35) a binary configuration, corresponding instant by instant to the reached counting value;

— the first memory (M3) which is a k cells memory is capable of memorizing the pulses coming from said second output of said decision circuit (CD) at the addresses corresponding to binary configurations emitted by said binary counter (CC2), and is able furthermore to be reset by the pulses it receives, through a second delay line (L4), from the first output of said first cyclic counter (CL4);

— the second memory (M6) is able to memorize and present towards the output of the receiving apparatus the binary configurations it receives from said first memory (M3) in dependence of the pulses it receives from the first output of said first cyclic counter (CL4);

— the logic circuit (PP) is of the sequential type and is able to subdivide the frame (NT) into a given number of intervals (i), to make a comparison between the statistical frequencies at which, during each interval, there is occurrence of altered modulable waveforms received from the second output of said decision circuit (DC), and to emit consequently to the output a configuration of logic symbols towards that cyclic counter (CL4).

10. Apparatus for frame synchronization according to claim 9 and to carry out the method of any one of method claims 5 and 7, characterized in that said logic circuit of the sequential type (PP) basically comprises:

— first logic circuit (LE2) of combinatory type, able to receive from the output (35) of said binary counter (CC2) the reached counting value, and to emit from its first output (71) a logic "0" if said counting value is less than k and a logic "1" if it is greater than k or equal to k, able furthermore to emit from its second output (72) a logic "1" if said counting value is equal to zero or is equal to k—1;

— a second logic circuit (LE1) of combinatory type, arranged to receive from said second output (67) of said first cyclic counter (CL4) the reached counting value, and to emit a logic "1" from its first (73), second (74) or third (75) output if said counting value is comprised between a first (N1, N2), a second (N3, N4) or a third (N5, N6) predetermined pair of numbers, respectively;

— a first bistable circuit (F3) arranged to emit at the output (84) a logic "1" when the signal, which it receives from the first output of said first combinatory logic circuit (LE2), changes from logic "0" to logic "1" and to emit a logic "0" after each pulse it receives, through a third delay line (L7), from the first output (24) of said threshold decision circuit (CD); the presence at the output (84) of said logic "1" identifying a first time interval ($i_f$) belonging to said third series and third set;

— a second bistable circuit (F4) able to emit at the output (81) a logic "1" after each pulse it receives, through a fourth delay line (L6), from the second output (25) of said threshold decision logic (CD), and able also to emit at the output (81) a logic "0" after each pulse it receives from the first output (24) of said threshold decision circuit (CD); the presence at the output (81) of said logic "1" identifying a second time interval ($i_l$) belonging to said third series and third set;

— a first counter (CC3), able to co-operate with a second cyclic counter (CL7), having modulus H7, to count the pulses it receives, within a third interval ($i_o$), through a first gate (P10) enabled by the logic "1" coming from the third output (75) of said second combinatory circuit (LE1), from the second output (25) of said threshold decision circuit (CD), and able to emit at the output (91) the counting value reached instant by instant;

— a first up/down counter (CC4) able to co-operate with a third cyclic counter (CL6), having modulus H6, to count down the pulses it receives, within a fourth interval ($i_p$), through a second gate (P11) enabled by the logic "1" coming from the second output (74) of said second combinatory circuit (LE1), from the second output (25) of said threshold decision circuit (CD), and to count up the pulses it receives, within a fifth interval ($i_s$), from the same second output (25) of said threshold decision circuit (CD), through a third gate (P8) enabled, in conjunction, by logic "1" coming from the first output (73) of said second combinatory circuit (LE1) and by logic "1" coming from the first output (71) of said first combinatory circuit (LE2), and finally able to emit at the output (92) the counting value reached instant by instant;

— a second up/down counter (CC5) able to co-operate with a fourth cyclic counter (CL5), having modulus H5, to count up, within a first interval ($i_f$), the pulses it receives from the second output (25) of said threshold decision circuit (CD), through a fourth gate (P12) enabled by the logic "1" coming from the output (84) of said first bistable circuit (F3), and to count down, within the second interval ($i_l$), the pulses it receives from the first output (34) of said first cyclic counter (CL4), through a fifth gate (P13) enabled by the logic "1" coming from the output (81) of said second bistable circuit (F4), and able to emit onto the output (93) the counting value reached instant by instant;

— a logic circuit of the combinatory type (LC), able to utilize the counting value it receives from said counter (CC3) and from said first (CC4) and second (CC5) up/down counters, to emit from a first output (63), towards said first cyclic counter (CL4), a configuration of logic symbols apt to determine the cycle of said first cyclic counter (CL4), and from a second output (96) an enabling signal for the sixth gate (P14).

11. Apparatus for frame synchronization according to claim 10, characterized in that said second (CL7), third (CL6) and fourth (CL5) cyclic counters are reset by the pulse they receive, through the sixth gate (P14) enabled, by the first output (34) of said first cyclic counter (CL4), and further characterized in that the reset of said second (CL7), third (CL6) and fourth (CL5) cyclic counters determines the reset of said counter (CC3), of said first (CC4) and second (CC5) up/down counters, respectively.

12. Apparatus for frame synchronization according to claims 9 and 10 and relevant method according to claim 2, characterized in that said sequential logic circuit (PP) subdivides the frame (NT) into a first $(i_f)$, a second $(i_l)$, a third $(i_o)$, a fourth $(i_p)$, a fifth $(i_s)$, a sixth $(i_n)$ and a seventh $(i_c)$ intervals, so that in a steady state condition in said sixth $(i_n)$ and seventh $(i_c)$ intervals there is occurrence of all the pulses emitted by the second output (25) of said threshold decision circuit (CD), and so that said pulses are not present, unless there are transmission errors, in said first $(i_f)$, second $(i_l)$, third $(i_o)$, fourth $(i_p)$ and fifth $(i_s)$ intervals; and so that in steady state condition in the seventh $(i_c)$ interval there are present the modulable waveforms carrying the bits of the supplementary block allocated in the most significant and least significant positions.

13. Apparatus for frame synchronization as in claims 9 to 12, characterized in that said second cyclic counter (CL7) and said first counter (CC3) co-operate to compare the statistical frequencies of the pulses, emitted from the second output (25) of said threshold decision circuit (CD), occurring in said seventh $(i_c)$ and third $(i_o)$ intervals.

14. Apparatus for frame synchronization as in claims 9 to 12, characterized in that said first up/down counter (CC4) and said third cyclic counter (CL6) co-operate to compare the statistical frequencies of pulses, emitted from the second output (25) of said threshold decision circuit (CD), occurring in said fourth $(i_p)$, fifth $(i_s)$ and seventh $(i_c)$ intervals.

15. Apparatus for frame synchronization as in claims 9 to 12, characterized in that said second up/down counter (CC5) and said fourth cyclic counter (CL5) co-operate to compare statistical frequencies of pulses, emitted by the second output (25) of said threshold decision circuit (CD), occurring in said first $(i_f)$, second $(i_l)$ and seventh $(i_c)$ intervals.

**Patentansprüche**

1. Verfahren zur Rahmensynchronisation eines zusätzlichen Informationssignals, das innerhalb gegebener Zeitintervalle (zusätzlicher Rahmenintervalle) in Blöcken organisiert wird, beim Senden einem mehrpegeligen Hauptsignal zuaddiert wird, indem die den Extrempegeln entsprechenden Signalbilder (modulierbare Signalbilder) des Hauptsignals mit Hilfe des Pegelteilungsmultiplexierens (LDM) geändert werden, und beim Empfang durch ein entgegengesetztes Vorgehen wieder hergestellt wird, dadurch gekennzeichnet, daß man die Synchronisation der empfängerseitigen Vorrichtung mit der exakten Rahmen-Zeitsteuerung durch Wechsel der Dauer des Zählzyklus bewirkt, der die Zeitsteuerung dieses Rahmens auf der Basis der Anzahl der geänderten modulierbaren Signalbilder tastet, die man innerhalb geeigneter Zeitintervalle (i) feststellt, in die das Rahmenintervall beim Empfang unterteilt wird; daß man die Dauer des Zählzyklus dann verläugert, wenn die Anzahl der geänderten modulierbaren Signalbilder, die nach dem Intervall des Empfangs des zusätzlichen Informationssignals auftreten, größer ist als die Zahl, die sich aufgrund von Übertragungsfehlerstatistiken ergibt; und daß man umgekehrt die Dauer des Zählzylkus dann verkürzt, wenn diese größere Zahl der geänderten modulierbaren Signalbilder vor dem Intervall des Empfangs des zusätzlichen Informationssignals auftritt.

2. Verfahren zur Rahmensynchronisation nach Anspruch 1, dadurch gekennzeichnet, daß man die Blöcke (zusätzliche Blöcke) aus einer gegebenen Zahl zusätzlicher Informationsbits und aus zwei Bits mit dem logischen Wert "1", von denen eines an der Stelle der höchsten Wertigkeit und das andere an der Stelle der niedrigsten Wertigkeit des zusätzlichen Blocks angeordnet wird, aufbaut.

3. Verfahren zur Rahmensynchronisation nach Anspruch 1, dadurch gekennzeichnet, daß man die zusätzlichen Blöcke ausschließlich aus einer gegebenen Zahl von Bits der zusätzlichen Information aufbaut.

4. Verfahren zur Rahmensynchronisation nach Anspruch 3, dadurch gekennzeichnet, daß die zusätzlichen Blöcke aus einem einzigen Bit der zusätzlichen Information bestehen.

5. Verfahren zur Rahmensynchronisation nach Anspruch 1, dadurch gekennzeichnet, daß man im stetigen Zustand bei den Intervallen (i), in die man das zusätzliche Rahmenintervall (NT) beim Empfang unterteilt, drei Serien vorsieht: eine erste Serie aus Intervallen $(i_o, i_r)$ von konstanter und gegebener Dauer; eine zweite Serie $(i_s, i_c+i_n)$ aus Intervallen veränderlicher Dauer, da deren Anfangzeitpunkt oder Endzeitpunkt in Abhängigkeit von der Feststellung modulierbarer Signalbilder veränderlich ist; und eine dritte Serie aus Intervallen $(i'_c, i''_c, i_f, i_l)$ von derart veränderlicher Dauer, daß eine gegebene Anzahl der modulierbaren Signalbilder, die eine gegebene Zählstellung einnehmen, bei jedem dieser Intervalle dieser dritten Serie auftritt, wobei sich die Intervalle dieser dritten Serie gegebenenfalls mit denen der anderen Serien überlappen können.

6. Verfahren zur Rahmensynchronisation nach den Ansprüchen 1, 5, dadurch gekennzeichnet, daß sich in den Intervallen $(i''_c, i''_c, i_f, i_l)$

der dritten Serie von variabler Dauer ein einziges modulierbares Signalbild je zusätzlichem Rahmen befindet.

7. Verfahren zur Rahmensynchronisation nach den Ansprüchen 1, 5, dadurch gekennzeichnet, daß man bei den Zeitintervallen (i), in die man das zusätzliche Rahmenintervall (NT) beim Empfang unterteilt, drei Gruppen vorsieht: eine erste Gruppe aus zwei Intervallen ($i'_c$, $i''_c$), die zur dritten Serie gehören und so vorbestimmt sind, daß im Zustand der erzielten Synchronisation (stetiger Zustand) die modulierbaren Signalbilder, die die extremen Symbole des zusätzlichen Blocks tragen, auftreten; eine zweite Gruppe aus Intervallen ($i_n$), die ebenfalls zur dritten Serie gehören und in denen im stetigen Zustand modulierbare Signalbilder, die die übrigen Symbole des zusätzlichen Blocks tragen, auftreten; und eine dritte Gruppe aus Intervallen ($i_s$, $i_o$, $i_p$, $i_f$, $i_l$), von denen jedes irgendeiner der angegebenen Serien angehört und in denen im stetigen Zustand kein modulierbares Signalbild, das Symbole des zusätzlichen Blocks trägt, auftritt.

8. Verfahren zur Rahmensynchronisation nach den Ansprüchen 1, 4, 6, 7, dadurch gekennzeichnet, daß die beiden diese erste Gruppe bildenden Intervalle ($i'_c$, $i''_c$) zusammenfallen.

9. Einrichtung zur Rahmensynchronisation, mit einer Wiederherstellungsschaltung (RS2) für die Symbolfrequenz (1/T) des empfangenen Signals und einer Schwellenentscheidungsschaltung (CD), die von dieser Symbolfrequenz (1/T) zeitgesteuert ist und einen ersten und einen zweiten Ausgang (24, 25) hat, wobei diese Schaltungen mit einem Schaltungskomplex aus einem ersten Ringzähler (CL4), einem zweiten Zähler (CC2), einem ersten und einem zweiten Speicher (M3, M6) und einer logischen Schaltung (PP) verbunden sind, dadurch gekennzeichnet, daß zur Durchführung des Verfahrens nach Anspruch 1:

— die Schwellen-Entscheidungsschaltung (CD) die den Extrempegeln entsprechenden Signalbilder (modulierbare Signalbilder) des Hauptsignals durch Vergleich dieser Signalbilder mit einem ersten Schwellenpaar und durch Abgeben eines Impulses von einem ersten Ausgang (24) bei jedem erfolgten Erkennen erkennt, und die beim Senden geänderten modulierbaren Signalbilder durch Vergleich dieser modulierbaren Signalbilder mit einem zweiten Schwellenpaar und durch Abgeben eines Impulses auf einen zweiten Ausgang (25) für jedes erkannte geänderte modulierbare Signalbild erkennt;

— der erste Ringzähler (CL4) die Rahmen-Zeitsteuerung in Abhängigkeit von der Symbolfrequenz (1/T), die er von der Wiederherstellungsschaltung (RS2) empfängt, erzeugt und von einem ersten Ausgang (34) einen Impuls bei jeder Vollendung seines Zählzyklus und von einem zweiten Ausgang (67) eine Binär-

Konfiguration abgibt, die von Zeitpunkt zu Zeitpunkt dem erreichten Zählwert entspricht, und weiterhin die Dauer seines Zählzyklus in Abhängigkeit von einer Konfiguration logischer Symbole ändert, die er von einer sequentiellen logischen Schaltung (PP) empfängt;

— der zweite Zähler (CC2), der ein (k+1 Zustände)-Binärzähler ist, gemäß seiner Schaltung durch einen Impuls, den er vom ersten Ausgang des Ringzähler (CL4) empfängt, zurückstellbar ist und die Impulse zählt, die er über eine erste Verzögerungsstrecke (L5) vom ersten Ausgang (24) der Entscheidungsschaltung (CD) empfängt, und am Ausgang (35) eine von Zeitpunkt zu Zeitpunkt dem erreichten Zählwert entsprechende Binärkonfiguration abgibt;

— der erste Speicher (M3), der aus k Zellen besteht, die vom zweiten Ausgang der Entscheidungsschaltung (CD) kommenden Impulse an den den vom Binärzähler (CC2) abgegebenen Binärkonfigurationen entsprechenden Adressen speichert und durch die Impulse, die er über eine zweite Verzögerungsstrecke (L4) vom ersten Ausgang des ersten Ringzählers (CL4) empfängt, zurückstellbar ist;

— der zweite Speicher (M6) die Binärkonfiguration, die er vom ersten Speicher (M3) in Abhängigkeit von vom ersten Ausgang des ersten Ringzählers (CL4) empfangenen Impulsen empfängt, speichert und sie an den Ausgang der Empfängervorrichtung abgibt;

— die logische Schaltung (PP) sequentiellen Typs ist, den Rahmen (NT) in eine gegebene Anzahl von Intervallen (i) unterteilt, einen Vergleich zwischen den statistischen Frequenzen, zu denen während jedes Intervalls vom zweiten Ausgang der Entscheidungsschaltung (CD) empfangene geänderte modulierbare Signalbilder auftreten, durchführt und als Folge hiervon ausgangsseitig eine Konfiguration logischer Symbole zum Ringzähler (CL4) abgibt.

10. Einrichtung zur Rahmensynchronisation nach Anspruch 9 zur Durchführung des Verfahrens nach einem der Verfahrensansprüche 5 und 7, dadurch gekennzeichnet, daß die logische Schaltung (PP) des sequentiellen Type folgende Hauptbestandteile umfaßt:

— eine erste logische Verknüpfungsschaltung (LE2), die vom Ausgang (35) des Binärzählers (CC2) den erreichten Zählwert empfängt und von ihrem ersten Ausgang (71) eine logische "0" abgibt, wenn der Zählwert niedriger als k ist, und eine logische "1" abgibt, wenn der Zählwert größer oder gleich k ist, und die an ihrem zweiten Ausgang (72) eine logische "1" abgibt, wenn der Zählwert gleich 0 oder k—1 ist;

— eine zweite logische Verknüpfungsschaltung (LE1), die gemäß ihrer Schaltungsanordnung von zweiten Ausgang (67) des ersten Ringzählers (CL4) den erreichten Zählwert empfängt und von ihrem ersten Ausgang (73), von ihrem zweiten Ausgang (74) oder von ihrem dritten Ausgang (75) eine logische "1" abgibt, wenn der Zählwert zwischen zwei ersten Zahlen (N1, N2), zwischen zwei zweiten Zahlen (N3, N4) bzw. zwischen zwei dritten Zahlen (N5, N6), die vorgegeben sind, liegt;

— eine erste bistabile Schaltung (F3), die gemäß ihrer Schaltungsanordnung an ihrem Ausgang (84) eine logische "1" abgibt, wenn das Signal, das sie vom ersten Ausgang der ersten logischen Verknüpfungsschaltung (LE2) empfängt, vom logischen Wert "0" zum logischen Wert "1" wechselt, und die eine logische "0" nach jedem Impuls abgibt, den sie über eine dritte Verzögerungsstrecke (L7) vom ersten Ausgang (24) der Schwellen-Entscheidungsschaltung (CD) empfängt, wobei das Vorliegen des logischen Werts "1" am Ausgang (84) ein erstes Zeitintervall ($i_f$), das zur dritten Serie und zur dritten Gruppe gehört, identifiziert;

— eine zweite bistabile Schaltung (F4), die an ihrem Ausgang (81) eine logische "1" nach jedem Impuls abgibt, den sie über eine vierte Verzögerungsstrecke (L6) vom zweiten Ausgang (25) der Schwellen-Entscheidungsschaltung (CD) empfängt, und die am Ausgang (81) eine logische "0" nach jedem Impuls abgibt, den sie vom ersten Ausgang (24) der Schwellen-Entscheidungsschaltung (CD) empfängt, wobei das Vorliegen des logischen Werts "1" am Ausgang (81) ein zweites Zeitintervall ($i_l$), das zur dritten Series und zur dritten Gruppe gehört, identifiziert;

— einen ersten Zähler (CC3), der mit einem zweiten Ringzähler (CL7) mit einem Betrag H7 zum Zählen der Impulse zusammenwirkt, die er innerhalb eines dritten Intervalls ($i_o$) über ein erstes Tor (P10), das durch den logischen Wert "1", der vom dritten Ausgang (75) der zweiten Verknüpfungsschaltung (LE1) kommt, durchgeschaltet wird, vom zweiten Ausgang (25) der Schwellen-Entscheidungsschaltung (CD) empfängt, und der an einem Ausgang (91) den von Zeitpunkt zu Zeitpunkt erreichten Zählwert abgibt;

— einen ersten Auf- und Abzähler (CC4), der mit einem dritten Ringzähler (CL6) mit dem Betrag H6 zusammenwirkt und die Impulse abwärtszählt, die er innerhalb eines vierten Intervalls ($i_p$) über ein zweites Tor (P11), das durch den vom zweiten Ausgang (74) der zweiten Verknüpfungsschaltung (LE1) kommenden logischen Wert "1" durchgeschaltet wird, vom zweiten Ausgang (25) der Schwellen-Entscheidungsschältung (CD) empfängt, und der die Impulse aufwärtszählt, die er innerhalb eines fünften Intervalls ($i_s$) von diesem selben zweiten Ausgang (25) der Schwellen-Entscheidungsschaltung (CD) über ein drittes Tor (P8), das in Verbindung mit einer logischen "1", die vom ersten Ausgang (73) der zweiten logischen Verknüpfungsschaltung (LE1) kommt, und durch eine logische "1", die vom ersten Ausgang (71) der ersten logischen Verknüpfungsschaltung LE2) kommt, durchgeschaltet wird, empfängt, und der schließlich am Ausgang (92) den von Zeitpunkt zu Zeitpunkt erreichten Zählwert abgibt;

— einen zweiten Auf- und Abzähler (CC5), der mit einem vierten Ringzähler (CL5) mit dem Betrag H5 zusammenwirkt und der innerhalb eines ersten Intervalls ($i_f$) die Impulse aufwärtszählt, die er vom zweiten Ausgang (25) der Schwellen-Entscheidungsschaltung (CD) über ein viertes Tor (P12), das durch eine vom Ausgang (84) der ersten bistabilen Schaltung (F3) kommende logische "1" durchgeschaltet wird, empfängt, und der innerhalb des zweiten Intervalls ($i_l$) die Impulse, die er vom ersten Ausgang (34) des ersten Ringzählers (CL4) über ein fünftes Tor (P13), das durch eine vom Ausgang (81) der zweiten bistabilen Schaltung (F4) kommenden logische "1" durchgeschaltet wird, empfängt, und der schließlich auf den Ausgang (93) den von Zeitpunkt zu Zeitpunkt erreichten Zählwert abgibt;

— eine logische Verknüpfungsschaltung (LC), die den Zählwert, den sie vom Zähler (CC3) und vom ersten und vom zweiten Auf- und Abzähler (CC4, CC5) empfängt, dazu verwendet, von einem ersten Ausgang (63) an den ersten Ringzähler (CL4) eine Konfiguration logischer Symbole abzugeben, die den Zyklus des ersten Ringzählers (CL4) bestimmt, und von einem zweiten Ausgang (96) ein Durchschaltsignal für das sechste Tor (P14) abzugeben.

11. Einrichtung zur Rahmensynchronisation nach Anspruch 10, dadurch gekennzeichnet, daß der zweite Ringzähler (CL7), der dritte Ringzähler (CL6) und der vierte Ringzähler (CL5) durch den Impuls zurückgestellt werden, den sie über das durchgeschaltete sechste Tor (P14) vom ersten Ausgang (34) des ersten Ringzählers (CL4) empfangen, und daß die Rückstellung des zweiten, des dritten und des vierten Ringzählers (CL7, CL6, CL5) die Rückstellung des Zählers (CC3) bzw. des ersten Auf- und Abzählers (CC4) bzw. des zweiten Auf- und Abzählers (CC5) bewirkt.

12. Einrichtung zur Rahmensynchronisation nach den Ansprüchen 9 und 10 zur Durchführung des Verfahrens nach Anspruch 2, dadurch gekennzeichnet, daß die logische Schaltung (PP) des sequentiellen Typs den Rahmen (NT) in sieben Intervalle, nämlich ein erstes ($i_f$), ein zweites ($i_l$), ein drittes ($i_o$), ein viertes ($i_p$), ein fünftes ($i_s$), ein sechstes ($i_n$) und ein siebtes ($i_c$)

Intervall, so unterteilt, daß im stetigen Zustand alle vom zweiten Ausgang (25) der Schwellen-Entscheidungsschaltung (CD) abgegebenen Impulse im sechsten ($i_n$) und im siebten ($i_c$) Intervall auftreten und die Impulse, wenn keine Übertragungsfehler vorliegen, im ersten ($i_f$), im zweiten ($i_l$), im dritten ($i_o$), im vierten ($i_p$) und im fünften ($i_s$) Intervall nicht auftreten, und so, daß im stetigen Zustand im siebten ($i_c$) Intervall die modulierbaren Signalbilder vorliegen, die die Bits des zusätzlichen Blocks, die an den Stellen höchster Wertigkeit und niedrigster Wertigkeit angeordnet sind, tragen.

13. Einrichtung zur Rahmensynchronisation nach den Ansprüchen 9 bis 12, dadurch gekennzeichnet, daß der zweite Ringzähler (CL7) und der erste Zähler (CC3) zum Vergleichen der statistischen Frequenzen der Impulse, die vom zweiten Ausgang (25) der Schwellen-Entscheidungsschaltung (CD) abgegeben werden und im siebten ($i_c$) und dritten ($i_o$) Intervall auftreten, zusammenwirken.

14. Einrichtung zur Rahmensynchronisation nach den Ansprüchen 9 bis 12, dadurch gekennzeichnet, daß der erste Auf- und Abzähler (CC4) und der dritte Ringzähler (CL6) zum Vergleichen der statistischen Frequenzen der Impulse, die vom zweiten Ausgang (25) der Schwellen-Entscheidungsschaltung (CD) abgegeben werden und im vierten ($i_p$), fünften ($i_s$) und siebten ($i_e$) Intervall auftreten, zusammenwirken.

15. Einrichtung zur Rahmensynchronisation nach den Ansprüchen 9 bis 12, dadurch gekennzeichnet, daß der zweite Auf- und Abzähler (CC5) und der vierte Ringzähler (CL5) zum Vergleichen der statistischen Frequenzen der Impulse, die vom zweiten Ausgang (25) der Schwellen-Entscheidungsschaltung (CD) abgegeben werden und im ersten ($i_f$), im zweiten ($i_l$) und im siebten ($i_c$) Intervall auftreten, zusammenwirken.

**Revendications**

1. Procédé de synchronisation de trame d'un signal d'information supplémentaire organisée en blocs pendant des intervalles prédéterminés de trame (intervalles de trame supplémentaire) et additionnée en transmission à un signal principal multiniveau an altérant les formes d'onde correspondantes aux niveaux extrêmes du signal principal (formes d'onde modulables) au moyen de la technique de multiplation par répartition en niveaux (LDM) et récupérée d'après une procédure inverse en réception, caractérisé en ce que la synchronisation de l'appareil récepteur avec le rythme exact de trame est opérée en altérant la durée du cycle de comptage qui établit le rythme de ladite trane en dépendance du nombre de formes d'onde modulables altérées détectées en des intervalles déterminés de temps (i) où en réception l'intervalle de trame est subdivisé, ladite durée du cycle de comptage étant allongée lorsque le nombre de formes d'onde modulables altérées, qui arrivent après l'intervalle de réception de ladite information supplémentaire, est plus élevé que celui qui serait justifié par la statistique des erreurs de transmission, ladite durée du cycle de comptage étant au contraire réduite lorsque ledit nombre plus élevé de formes d'onde modulables altérées arrive avant ledit intervalle de réception de l'information supplémentaire.

2. Le procédé de synchronisation de trame, suivant la revendication 1, caractérisé en ce que lesdits blocs supplémentaires sont constitués par un nombre prédéterminé de bits d'information supplémentaire et par deux bits ayant la valeur logique "1" placés l'un dans la position la plus significative du block supplémentaire et l'autre dans la position la moins significative.

3. Le procédé de synchronisation de trame, suivant la revendication 1, caractérisé en ce que lesdits blocs supplémentaires sont constitués exclusivement par un nombre prédéterminé de bits d'information supplémentaire.

4. Le procédé de synchronisation de trame, suivant la revendication 3, caractérisé en ce que lesdits blocs supplémentaires sont constituée par un seul bit d'information supplémentaire.

5. Le procédé de synchronisation de trame, suivant la revendication 1, caractérisé en ce que, à régime permanent, parmi lesdits intervalles de temps (i) où en réception l'intervalle de trame supplémentaire (NT) est subdivisé, un premier groupe est constitué par des intervalles ($i_o$, $i_p$) qui ont une durée constante et prédéterminée, un deuxième groupe ($i_s$, $i_c + i_n$) est constitué par des intervalles qui ont une durée variable, leur instant de début ou de fin étant variable en fonction de la détection des formes d'onde modulables, un troisième groupe est constitué par des intervalles ($i'_c$, $i''_c$, $i_f$, $i_l$) qui ont une durée variable de façon que dans chacun d'eux il y arrive un nombre prédéterminé de formes d'onde modulables qui occupent un numéro d'ordre de comptage déterminé, les intervalles dudit troisième groupe étant éventuellement superposés à ceux des autres groupes.

6. Le procédé de synchronisation de trame suivant les revendications 1, 5, caractérisé en ce que dans lesdits intervalles ($i'_c$, $i''_c$, $i_f$, $i_l$) de durée variable du troisième groupe il y a une seule forme d'onde modulable par chaque trame supplémentaire.

7. Le procédé de synchronisation de trame suivant les revendications 1, 5, caractérisé en ce que parmi lesdits intervalles de temps (i), où en réception est subdivisé l'intervalle de trame supplémentaire (NT), un premier ensemble est constitué par deux intervalles ($i'_c$, $i''_c$), appartenant audit troisième groupe, prédéterminés de façon que, dans les conditions de synchronisation atteinte (régime permanent), ils comprennent les formes d'onde modulables qui portent les symboles extrêmes du bloc supplémentaire; un deuxième ensemble est constitué par des

intervalles ($i_n$), eux mêmes appartenant audit troisième groupe, où, à régime permanent, il y a les formes d'onde modulables qui portent les autres symboles du bloc supplémentaire; un troisième ensemble est constitué par les intervalles ($i_s$, $i_o$, $i_p$, $i_f$, $i_l$), chacun d'eux appartenant à un quelconque des trois groupes susmentionnés qui, à régime permanent, n'a aucune forme d'onde modulable qui porte les symboles du bloc supplémentaire.

8. Le procédé de synchronisation de trame suivant les revendications 1, 4, 6, 7, caractérisé en ce que lesdits deux intervalles ($i'_c$, $i''_c$) constituant ledit premier ensemble coïncident.

9. Dispositif de synchronisation de trame comprenant un circuit de récupération (RS2) de la fréquence de symbole (1/T) du signal reçu et un circuit de décision à seuil (CD) rythmé par ladite fréquence de symbole (1/T) et ayant une première et une deuxième sortie (24, 25), lesdits circuits étant associés avec la combinaison d'un premier compteur cyclique (CL4), un deuxième compteur (CC2), première et deuxième memoires (M3, M6) et un circuit logique (PP), caractérisé en ce que pour réaliser le procédé de la revendication 1:

— le circuit de décision à seuil (CD) est apte à reconnaître les formes d'onde du signal principal correspondant aux niveaux extrêmes (formes d'onde modulables) en dépendance de la comparaison avec une première paire de seuils, et en émettant d'une première sortie (24) une impulsion à chaque reconnaissance intervenue, et apte à reconnaître les formes d'onde modulables qui ont été altérées en transmission en dépendance de la comparaison avec une deuxième paire de seuils, et en émettant d'une deuxième sortie (25) une impulsion à chaque reconnaissance intervenue;

— le premier compteur cyclique (CL4) est apte à établir le rythme de trame, dépendant de la fréquence de symbole (1/T) qu'il reçoit dudit circuit de récupération (RS2), émettant d'une première sortie (34) une impulsion à chaque complètement de son cycle de comptage, et d'une deuxième sortie (67) une configuration binaire correspondant au numéró de comptage atteint, apte aussi à changer la durée de son cycle de comptage par rapport à une configuration de symboles logiques qu'il reçoit d'un circuit logique (PP) du type séquentiel;

— le deuxième compteur (CC2) qui est un compteur binaire à K+1 étages, est apte à être remis à zéro par l'impulsion qu'il reçoit de la première sortie dudit compteur cyclique (CL4) et apte à compter les impulsions qu'il reçoit, à travers une première ligne de retard (L5), de la première sortie (24) dudit circuit de décision (CD), et à émettre en sortie (35) une configuration binaire correspondant au numéro de comptage atteint;

— la première mémoire (M3), qui est une mémoire à K cellules, est apte à mémoriser les impulsions, provenant de la deuxième sortie dudit circuit de décision (CD), aux adresses correspondant aux configurations binaires émises par ledit compteur binaire (CC2), et est apte aussi à être remise à zéro par les impulsions qu'elle reçoit, à travers une deuxième ligne de retard (L4), de la première sortie dudit premier compteur cyclique (CL4);

— la deuxième mémoire (M6) est apte à mémoriser et présenter vers la sortie de l'appareil récepteur les configurations binaires qu'elle reçoit de ladite première mémoire (M3), en dépendance des impulsions qu'elle reçoit de la première sortie dudit premier compteur cyclique (CL4);

— le circuit logique (PP) est de type séquentiel et est apte à subdiviser la trame (NT) dans un nombre déterminé d'intervalles (i), à effectuer la comparaison des fréquences statistiques avec lesquels, dans chaque intervalle, se présentent les formes d'onde modulables altérées reçues de la deuxième sortie dudit circuit de décision (CD), et à émettre par conséquent à la sortie une configuration de symboles logiques vers ledit compteur cyclique (CL4).

10. Dispositif de synchronisation de trame suivant la revendication 9 et le procédé des revendications 5 et 7, caractérisé en ce que ledit circuit logique de type séquentiel (PP) est essentiellement constitué par:

— un premier circuit logique (LE2) du type combinatoire, apte à recevoir de la sortie (35) dudit compteur binaire (CC2), la valeur de comptage atteint par ce compteur et à émettre de sa première sortie (71) un "0" logique, si ladite valeur de comptage est plus petite que K, en un "1" logique si elle est plus grande ou égale à K, apte aussi à émettre de sa deuxième sortie (72) un "1" logique si ladite valeur est égale à zéro ou à K—1;

— un deuxième circuit logique (LE1) du type combinatoire apte à recevoir de la deuxième sortie (67) dudit premier compteur cyclique (CL4) la valeur la comptage atteint par ce compteur et à émettre un "1" logique de sa première (73), de sa deuxième (74) ou de sa troisième (75) sortie si ladite valeur de comptage est comprise respectivement entre une première (N1, N2), une deuxième (N3, N4) ou une troisième (N5, N6) paire prédéterminée de numéros;

— un premier circuit bistable (F3), apte à émettre à la sortie (84) un "1" logique lorsque le signal qu'il reçoit de la première sortie dudit premier circuit logique combinatoire (LE2) passe de "0" logique à "1" et à émettre un "0" logique après chaque impulsion qu'il reçoit, à travers une troisième ligne de retard (L7), de la première sortie (24) dudit circuit de décision à seuil (CD), la présence à la sortie (84) dudit "1" logique identifiant un premier intervalle de temps ($i_f$) appartenant au troisième groupe et au troisième ensemble;

— un deuxième circuit bistable (F4) apte à émettre à la sortie (81) un "1" logique après chaque impulsion qu'il reçoit, à travers une quatrième ligne de retard (L6), de la deuxième sortie (25) dudit circuit de décision à seuil (CD) et apte à émettre à la sortie (81) un "0" logique après chaque impulsion qu'il reçoit de la première sortie (24) dudit circuit de décision à seuil (CD), la présence à la sortie (81) dudit "1" logique identifiant un deuxième intervalle de temps ($i_l$) qui fait partie desdits troisième groupe et troisième ensemble;

— un premier compteur (CC3), apte à coopérer avec un deuxième compteur cyclique (CL7) de module H7, pour compter pendant ledit troisième intervalle ($i_o$) les impulsions qu'il reçoit, à travers une première porte (P10) validée par le "1" logique provenant de la troisième sortie (75) dudit deuxième circuit combinatoire (LE1), de la deuxième sortie (25) dudit circuit de décision à seuil (CD), et apte à émettre à la sortie (91) la valeur de comptage atteint à chaque instant;

— un premier compteur-décompteur (CC4) apte à coopérer avec un troisième compteur cyclique (CL6) de module H6, pour compter en arrière, pendant un quatrième intervalle ($i_p$), les impulsions qu'il reçoit, à travers une deuxième porte (P11), validée par le "1" logique provenant de la deuxième sortie (74) dudit deuxième circuit combinatoire (LE1), de la deuxième sortie (25) dudit circuit de décision à seuil (CD), et pour compter en avant, pendant un cinquième intervalle ($i_s$), les impulsions qu'il reçoit de la deuxième sortie (25) dudit circuit de décision à seuil (CD), à travers une troisième porte (P8) validée conjointement par le "1" logique provenant de la première sortie (73) dudit deuxième circuit combinatoire (LE1) et par le "1" logique provenant de la première sortie (71) dudit premier circuit combinatoire (LE2), et enfin apte à émettre à la sortie (92) la valeur de comptage atteint à chaque instant;

— un deuxième compteur-décompteur (CC5) apte à coopérer avec un quatrième compteur cyclique (CL5) de module H5 pour compter en avant, pendant un premier intervalle ($i_f$), les impulsions qu'il reçoit, à travers une quatrième porte (P12) validée par le "1" logique provenant de la sortie (84) dudit premier circuit bistable (F3), de la deuxième sortie (25) dudit circuit à seuil (CD), et pour compter en arrière, pendant un deuxième intervalle ($i_l$), les impulsions qu'il reçoit, à travers une cinquième porte (P13) validée par le "1" logique provenant de la sortie (81) dudit deuxième circuit bistable (F4), de la première sortie (34) dudit premier compteur cyclique (CL4), et apte à émettre à la sortie (93) la valeur de comptage atteint à chaque instant;

— un circuit logique de type combinatoire (LC) apte à utiliser les valeurs de comptage qu'il reçoit dudit compteur (CC3) et desdits premier (CC4) et deuxième (CC5) compteur-décompteur, pour émettre d'une première sortie (63), vers ledit premier compteur cyclique (CL4), une configuration de symboles logiques apte à en déterminer son cycle, et d'une deuxième sortie (96) un signal de validation pour une sixième porte (P14).

11. Dispositif de synchronization de trame suivant la revendication 10, caractérisé en ce que lesdits deuxième (CL7), troisième (CL6) et quatrième (CL5) compteurs cycliques sont remis à zéro par l'impulsion qu'ils reçoivent, à travers ladite sixième ports (P14), de la première sortie (34) dudit premier compteur cyclique (CL4), et en ce que ladite remise à zéro desdits deuxième (CL7), troisième (CL6) et quatrième (CL5) compteurs cycliques cause la remise à zéro respectivement dudit compteur (CC3) et desdits premier (CC4) et deuxième (CC5) compteurs-décompteurs.

12. Dispositif de synchronisation de trame suivant les revendications 9 et 10 et le procédé de la revendication 2, caractérisé en ce que ledit circuit logique séquentiel (PP) subdivise la trame (NT) dans un premier ($i_f$), un deuxième ($i_l$), un troisième ($i_o$), un quatrième ($i_p$), un cinquième ($i_s$), un sixième ($i_n$) et un septième ($i_c$) intervalles, de telle façon qu'à régime permanent dans lesdits sixième ($i_n$) et septième ($i_c$) intervalles soient présentes toutes les impulsions émises de la deuxième sortie (25) dudit circuit de décision à seuil (CD) et qu'elles ne soient pas présentes, sauf cas d'erreurs de transmission, dans lesdits premier ($i_f$), deuxième ($i_l$), troisième ($i_o$), quatrième ($i_p$) et cinquième ($i_s$) intervalles; et de telle façon qu'a régime permanent dans ledit septième ($i_c$) intervalle soient présentes les formes d'onde modulables qui véhiculent les bits du bloc supplémentaire placés dans la position la plus significative et dans la position la moins significative.

13. Dispositif de synchronisation de trame suivant les revendications 9 à 12, caractérisé en ce que ledit deuxième compteur cyclique (CL7) et ledit premier compteur (CC3) coopérant pour comparer les fréquences statistiques des impulsions émises de la deuxième sortie (25) dudit circuit de décision à seuil (CD), présentes dans lesdits septième ($i_c$) et troisième ($i_o$) intervalles.

14. Dispositif de synchronisation de trame suivant les revendications 9 à 12, caractérisé en ce que ledit premier compteur-décompteur (CC4) et ledit troisième compteur cyclique (CL6) coopèrent pour comparer les fréquences statistiques des impulsions émises de la deuxième sortie (25) dudit circuit de décision à seuil (CD), présentes dans lesdits quatrième ($i_p$), cinquième ($i_s$) et septième ($i_c$) intervalles.

15. Dispositif de synchronisation de trame suivant les revendications 9 à 12, caractérisé en ce que ledit deuxième compteur-décompteur (CC5) et ledit quatrième compteur cyclique (CL5) coopèrent pour comparer les fréquences statistiques des impulsions émises de la deuxième sortie (25) dudit circuit de décision à seuil (CD), présentes dans lesdits premier ($i_f$), deuxième ($i_l$) et septième ($i_c$) intervalles.

Fig. 1

Fig. 2

0 037 556

Fig. 3

0 037 556

Fig. 4

0 037 556

Fig. 5